(19) Europäisches Patentamt
European Patent Office
Office européen des brevets

(11) Veröffentlichungsnummer: **0 248 308**
**A2**

# (12) EUROPÄISCHE PATENTANMELDUNG

(21) Anmeldenummer: **87107577.6**

(22) Anmeldetag: **25.05.87**

(51) Int. Cl.⁴: **C08L 69/00**, C08L 83/10, C08L 51/04, C08L 25/04, C08L 55/02, C08L 33/10, C08L 33/18, C08L 33/24, C08L 35/06, C08K 5/10, C08J 3/00

(30) Priorität: **06.06.86 DE 3619059**

(43) Veröffentlichungstag der Anmeldung:
**09.12.87 Patentblatt 87/50**

(84) Benannte Vertragsstaaten:
**DE ES FR GB IT NL**

(71) Anmelder: **BAYER AG**
**Konzernverwaltung RP Patentabteilung**
**D-5090 Leverkusen 1 Bayerwerk(DE)**

(72) Erfinder: **Kress, Hans-Jürgen, Dr.**
**c/o Mobay Corporation Mobay Road**
**Pittsburgh, PA 15205(US)**
Erfinder: **Peters, Horst, Dr.**
**Winterberg 25**
**D-5090 Leverkusen 3(DE)**
Erfinder: **Schoeps, Jochen, Dr.**
**Windmühlenstrasse 126**
**D-4150 Krefeld(DE)**
Erfinder: **Leitz, Edgar, Dr.**
**Goethestrasse 63**
**D-4047 Dormagen(DE)**
Erfinder: **Meier, Helmut-Martin, Dr.**
**Am Obersthof 3**
**D-4030 Ratingen(DE)**
Erfinder: **Berg, Klaus, Dr.**
**Hansastrasse 124**
**D-4150 Krefeld(DE)**

## (54) Leicht entformbare Formmassen.

(57) Gegenstand der vorliegenden Erfindung sind thermoplastische Formmassen, enthaltend Polycarbonate, Pfropfpolymerisate, gegebenenfalls Copolymerisate, Ester gesättigter Monocarbonsäuren und dreiwertiger Alkohole und gegebenenfalls andere Entformungsmittel und/oder andere bekannte Zusätze sowie ein Verfahren zu ihrer Herstellung.

EP 0 248 308 A2

Xerox Copy Centre

## Leicht entformbare Formmassen

Gegenstand der vorliegenden Erfindung sind thermoplastische Formmassen, enthaltend

A. 10 bis 90 Gew.-Teile, vorzugsweise 20 bis 80 Gew.-Teile, eines oder mehrerer thermoplastischer Polycarbonate,

B. 10 bis 60 Gew.-Teile, vorzugsweise 10 bis 50 Gew.-Teile, eines oder mehrerer Pfropfpolymerisate aus

B.1 5 bis 90 Gew.-Teilen, vorzugsweise 30 bis 80 Gew.-Teilen, einer Mischung aus

B.1.1 50 bis 95 Gew.-Teilen Styrol, α-Methylstyrol, kernsubstituiertem Styrol, Methylmethacrylat oder Mischungen daraus, und

B.1.2 50 bis 5 Gew.-Teilen (Meth)Acrylnitril, Methylmethacrylat, Maleinsäureanhydrid, N-substituiertem Maleinimid oder Mischungen daraus, auf

B.2 95 bis 10 Gew.-Teile, vorzugsweise 70 bis 20 Gew.-Teile, eines Kauschuks mit einer Glastemperatur $T_G \leq 10°C$ und gegebenenfalls

C. 0 bis 80 Gew.-Teile, vorzugsweise 10 bis 70 Gew.-Teile, eines thermoplastischen Copolymerisats aus

C.1 50 bis 95 Gew.-Teilen Styrol, α-Methylstyrol, kernsubstituiertem Styrol, Methylmethacrylat oder Mischungen daraus, und

C.2 50 bis 5 Gew.-Teilen (Meth)Acrylnitril, Methylmethacrylat, Maleinsäureanhydrid, N-substituiertem Maleinimid oder Mischungen daraus, wobei die Summe der Gew.-Teile aus A. + B. + gegebenenfalls C. jeweils 100 Gew.-Teile beträgt,

die dadurch gekennzeichnet sind, daß sie

D. 0,1 bis 3 Gew.-Teile, vorzugsweise 0,2 bis 2,0 Gew.-Teile, bezogen auf 100 Gew.-Teile A. + B. + gegebenenfalls C., eines oder mehrerer Ester aus gesättigten aliphatischen $C_{10}$ bis $C_{22}$-Monocarbonsäuren und dreiwertigen Alkoholen enthalten.

Polycarbonatmischungen mit ABS beziehungsweise mit Gemischen aus Pfropfpolymerisaten von Vinylmonomeren auf Kautschukgrundlagen und thermoplastischen Copolymerisaten aus Vinylmonomeren sind bekannt (siehe beispielsweise DT-AS 1 170 141, DOS 3 336 369, DT-AS 2 259 565 (Le A 14 751) und EP 5202 (Le A 18 745-EP)).

Gemäß EP 135 794 (Le A 22 390-EP) sind Formmassen auf Basis von Polydiorganosiloxan-Polycarbonat-Blockcopolymeren und ABS-Polymerisaten bekannt.

Bei der Herstellung von Spritzgußteilen, insbesondere von sehr dünnwandigen Teilen, wie beispielsweise Steckerleisten, zeigen entsprechende Formmassen oft eine ungenügende Entformbarkeit beziehungsweise Trennung des Fertigteils von der Spritzgußform. Dies äußert sich in einem Kleben des Materials an der jeweiligen Form beziehungsweise in einem Abreißen von Spritzgußteilen.

Es hat sich nun gezeigt, daß durch Einsatz von einem oder mehreren Estern von dreiwertigen Alkoholen und $C_{10}$-$C_{22}$-Fettsäuren sich eine deutliche Verbesserung der Entformbarkeit von Polycarbonat/ABS-Mischungen bei Entformungstemperaturen ab 100°C erzielen läßt.

Gemäß DE-OS 2 729 485, DE-OS 2 507 748 (Le A 16 284) und DE-OS 2 701 725 (Le A 17 784) sind Polycarbonatformmassen bekannt, die als Entformungshilfsmittel Ester aus mehrwertigen Alkoholen und langkettigen Fettsäuren enthalten.

DT-AS 2 064 095 beschreibt die Verwendung von Estern aus gesättigten aliphatischen $C_{10}$-$C_{22}$-Monocarbonsäuren und dreiwertigen Alkoholen als Entformungsmittel für Polycarbonat.

Aus der US-Patentschrift 4 174 325 (Le A 17 798) sind ABS-Formmassen bekannt, die 0,1 bis 10 Gew.-% eines Esters einer aliphatischen $C_{10}$-$C_{22}$-Monocarbonsäure und einer aliphatischen oder aromatischen Hydroxylverbindung mit 1 bis 6 OH-Gruppen enthalten. Derartige Formmassen haben eine gute Verarbeitbarkeit, was auf einer Kombination guter Eigenschaften beruht, nämlich auf guter Schlagzähigkeit Wärmeformbeständigkeit und Farbstabilität (Spalte 1, Zeilen 50 bis 60 vom US-PS 4 174 325). Die Formmassen können zusätzlich Farbstoffe, Schmiermittel und Flammschutzmittel enthalten (Spalte 1, Zeilen 16 bis 19 vom US-PS 4 174 325).

Aus den zitierten Patentschiften läßt sich kein Hinweis entnehmen, daß Ester gemäß Komponente D auch wirksame Entformungsmittel für PC/ABS-Mischungen, die gegenüber reinem Polycarbonat ein gänzlich verschiedenes Schmelzverhalten besitzen, darstellen. Durch die Verwendung der erfindungsgemäßen Formtrennmittel kommt es zu keiner Beeinträchtigung der physikalischen Eigenschaften des Endproduktes und zu keiner unerwünschten Verfärbung. Weiterhin kommt es unter den Verarbeitungsbedingungen von PC/ABS-Mischungen zu keinen Unverträglichkeitserscheinungen, noch reichert sich das Entformungsmittel auf der Oberfläche der Spritzgußteile an.

Erfindungsgemäß geeignete, thermoplastische, aromatische Polycarbonate gemäß Komponente A. sind solche auf Basis der Diphenole der Formel (II)

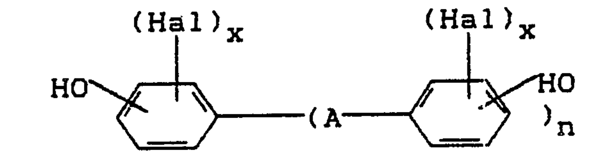

(II),

worin A eine Einfachbindung, ein $C_1$-$C_5$-Alkylen, ein $C_2$-$C_5$-Alkyliden, ein $C_5$-$C_6$-Cycloalkyliden, -S-oder -$SO_2$-, Hal, Chlor oder Brom, x 0, 1 oder 2 und "n" 1 oder 0 sind, und gegebenenfalls der Formel (IIa)

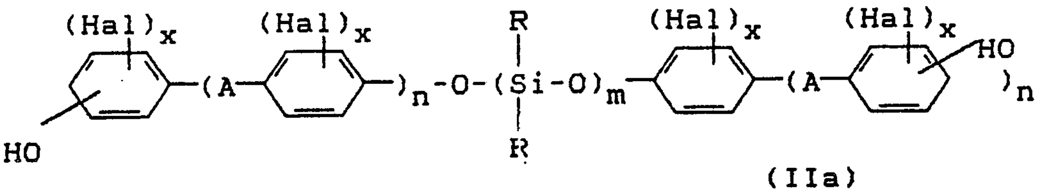

(IIa)

worin A, Hal, x und "n" die für Formel (II) genannte Bedeutung haben, und die R's gleich oder verschieden sind und ein lineares $C_1$-$C_{20}$-Alkyl, verzweigtes $C_3$-$C_{20}$-Alkyl, $C_6$-$C_{20}$-Aryl, vorzugsweise $CH_3$, sind und "m" eine ganze Zahl zwischen 5 und 100, vorzugsweise zwischen 20 und 80, ist.

Erfindungsgemäß geeignete Polycarbonate gemäß Komponente A. sind sowohl Homopolycarbonate als auch Copolycarbonate, wobei die Diphenole der Formel (IIa) nur für die Herstellung von Copolycarbonaten mit den Diphenolen der Formel (II) eingesetzt werden, wobei der Gewichtsanteil an Diphenolen der Formel (IIa) in den Copolycarbonaten jeweils zwischen 1 und 20 Gew.-%, vorzugsweise zwischen 1,5 und 15 Gew.-% und insbesondere zwischen 2 und 10 Gew.-%, bezogen jeweils auf die Gewichtssumme der eingesetzten Diphenole der Formeln (II) und (IIa), liegt.

Die Komponente A kann auch aus Mischungen der vorstehend definierten thermoplastischen Polycarbonate bestehen und wobei wenn es sich um Mischungen mit Polydiorganosiloxanen-Polycarbonat-Blockcopolymeren handelt, der Gewichtsanteil der Diphenole (IIa), bezogen auf die Gesamtsumme der Diphenole in der Polycarbonatmischung, zwischen 1 und 20 Gew.-% liegt.

Die Herstellung der erfindungsgemäß geeigneten Polycarbonate gemäß Komponente A. ist literaturbekannt und kann beispielsweise mit Phosgen nach dem Phasengrenzflächen verfahren oder mit Phosgen nach dem Verfahren in homogener Phase, dem sogenannten Pyridinverfahren, erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 3 334 872 (Le A 22 594).)

Geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethyl butyl)-phenol gemäß DE-OS 2 842 005 (Le A 19 006) oder Monoalkylphenol beziehungsweise Dialkylphenole mit insgesamt 8 bis 20 C-Atomen in den Alkylsubstituenten gemäß deutscher Patentanmeldung P 3 506 472.2 (Le A 23 654) wie 3,5-di-tert.-Butylphenol, p-iso-Octylphenol, p-tert.-Octylphenol, p-Dodecylphenyl und 2-(3,5-Dimethylheptyl)-phenol und 4-(3,5-Dimethyl-heptyl)-phenol. Die Menge an einzusetzenden Kettenabbrechern beträgt im allgemeinen zwischen 0,5 Mol-% und 10 Mol-%, bezogen auf die Summe der jeweils eingesetzten Diphenole (II) und gegebenenfalls (IIa).

Die erfindungsgemäß geeigneten Polycarbonate gemäß Komponente A. haben mittlere Gewichtsmittelmolekulargewichte ($\bar{M}$ w, gemessen beispielsweise durch Ultrazentrifugation oder Streulichtmessung) von 10.000 bis 200.000, vorzugsweise von 20.000 bi 80.000.

Geeignete Diphenole der Formel (II) sind beispielsweise Hydrochinon, Resorcin, 4,4'-Dihydroxydiphenyl, 2,2-Bis(4-hydroxyphenyl)-propan, 2,4-Bis-(4-hydroxyphenyl)-2-methyl butan, 1,1-Bis-(4-(hydroxyphenyl)-cyclohexan, 2,2-Bis-(3-chlor-4-hydroxyphenyl)-propan, 2,2-Bis-(3,5-dichlor-4-hydroxyphenyl)-propan und 2,2-Bis-(3,5-dibrom-4-hydroxyphenyl)-propan.

Bevorzugte Diphenole der Formel (II) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Geeignete Diphenole der Formel (IIa) sind solche, in denen R Methyl, Ethyl, Propyl, n-Butyl, tert.-Butyl oder Phenyl ist.

Bevorzugte Diphenole der Formel (IIa) sind die der Formel (IIb)

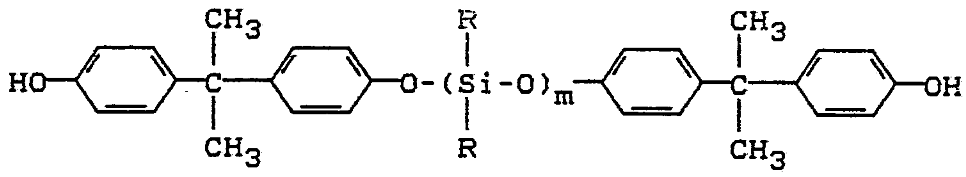

(IIb)

worin die R's gleich sind und die vorstehend genannte Bedeutung haben, also Methyl etc. oder Phenyl bedeuten und m wiederum eine ganze Zahl zwischen 5 und 100, vorzugsweise zwischen 20 und 80, ist.

Die Herstellung der Diphenole der Formel (IIa) kann beispielsweise aus den entsprechenden Bis-Chlorverbindungen (III)

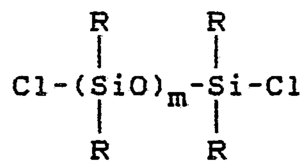

(III)

und den Diphenolen (II) beispielsweise gemäß US-Patent 3 419 634, Spalte 3 in Kombination mit US-Patent 3 189 662 erfolgen.

In den Bis-Chlorverbindungen (III) haben R und m die Bedeutung wie in den Diphenolen (IIa) beziehungsweise (IIb).

Die erfindungsgemäß geeigneten Polycarbonate gemäß Komponente A. können in bekannter Weise verzweigt sein, und zwar vorzugsweise durch den Einbau von 0.05 bis 2,0 Mol-%, bezogen auf die Summe der eingesetzten Diphenole, an drei oder mehr als dreifunktionellen Verbindungen, beispielsweise solchen mit drei oder mehr als drei phenolischen Gruppen.

Bevorzugte Polycarbonate sind neben dem Bisphenol A-Homopolycarbonat die Copolycarbonate von Bisphenol A mit bis zu 15 Mol-%, bezogen auf die Molsummen an Diphenolen, an 2,2-Bis-(3,5-dibrom-4-hydroxyphenyl)-propan oder die Copolycarbonate der Diphenole der Formel (II) mit 1 bis 20 Gew.-% an Diphenolen der Formel (IIa), vorzugsweise der Formel (IIb), bezogen jeweils auf die Gewichtssumme der Diphenole (II) und (IIa), beziehungsweise (II) und (IIb).

Zur Herstellung der Pfropfpolymerisate gemäß Komponente B. geeignete Kautschuke sind insbesondere Polybutadien, Butadien/Styrol-Copolymerisate mit bis zu 30 Gew.-%, bezogen auf Kautschukgewicht, eines niederen Alkylesters von Acryl-oder Methacrylsäure wie beispielsweise Methylmethacrylat, Ethylacrylat, Methylacrylat oder Ethylmeth acrylat. Weitere geeignete Kautschuke sind beispielsweise Polyisopren oder Polychloropren. Geeignet sind weiterhin Alkylacrylatkautschuke auf der Basis von $C_1$-$C_8$-Alkylacrylaten, insbesondere Ethyl-, Butyl-, Ethylhexylacrylat. Diese Alkacrylatkautschuke können gegebenenfalls bis zu 30 Gew.-%, bezogen auf Kautschukgewicht, Monomere wie Vinylacetat, Acrylnitril, Styrol, Methylmethacrylat und/oder Vinylether copolymerisiert enthalten. Diese Alkylacrylatkautschuke können wieterhin kleinere Mengen, vorzugsweise bis zu 5 Gew.-%, bezogen auf Kautschukgewicht, vernetzend wirkender, ethylenisch ungesättigter Monomerer enthalten. Solche Vernetzer sind z.B. Alkylendiol-di-(meth)-acrylate, Polyesterdi-(meth)-acrylate, Divinylbenzol, Trivinylbenzol, Triallylcyanurat, Allyl-(meth)-acrylat, Butadien oder Isopren. Solche Alkylacrylate sind bekannt. Acrylatkautschuke als Pfropfgrundlage können auch produkte sein, die einen vernetzten Dienkautschuk aus einem oder mehreren konjugierten Diens wie Polybutadien oder ein Copolymerisat eines konjugierten Diens mit einem ethylenisch ungesättigten Monomer, wie Styrol und/oder Acrylnitril, als Kern enthalten. Andere geeignete Kautschuke sind beispielsweise EPDM-Kautschuke, also Kautschuke aus Ethylen, Propylen und einem unkonjugierten Dienmonomer.

Bevorzugte Kautschuke zur Herstellung der Pfropolymerisate B. sind Dien-und Alkylacrylatkautschuke.

Die Kautschuke liegen im Pfropfpolymerisat B. in Form wenigstens partiell vernetzter Teilchen einer mittleren Teilchengröße von 0,09 bis 5 µm, insbesondere 0,1 bis 1 µm vor. Die Pfropfpolymerisate B. werden durch radikalische Pfropfpolymerisation der eingangs definierten Monomerengemische aus B.1.1 und B.1.2 in Gegenwart der zu pfropfenden Kautschuke B.2 hergestellt und sind durchweg bekannt.

Bevorzugte Herstellungsverfahren für die Pfropfpolymerisate B. sind Emulsions-, Lösungs-, Masse-oder Suspensionspolymerisation. Besonders bevorzugtes Pfropfpolymerisate B. sind die sogenannten ABS-Polymerisate. Als kernsubstituierte Styrole seien Halogenstyrole und p-Methylstyrol erwähnt.

Bevorzugte Copolymerisate gemäß Komponente C. sind solche aus wenigstens einem Monomeren aus der Reihe Styrol, α-Methylstyrol, kernsubstituiertem Styrol gemäß C.1 mit wenigstens einem Monomeren aus der Reihe Acrylnitril, Methacrylnitril, Methylmethacrylat, Maleinsäureanhydrid, N-subst. Maleinimid gemäß C.2.

Copolymerisate gemäß Komponente C. entstehen häufig bei der Pfropfpolymerisation zur Herstellung der Komponente B. als Nebenprodukte, besonders dann, wenn große Mengen Monomere auf kleine Mengen Kautschuk gepfropft werden.

Die erfindungsgemäß einzusetzende Menge an Copolymerisat C. von 0 bis 80 Gew.-Teilen, bezogen auf 100 Gew.-Teile aus A. + B. + C., bezieht diese Nebenprodukte der Pfropfpolymerisation nicht mit ein.

Die Copolymerisate gemäß Komponente C. sind harzartig, thermoplastisch und kautschukfrei. Besonders bevorzugte Copolymerisate C. sind solche aus Styrol und/oder α-Methylstyrol mit Acrylnitril und gegebenenfalls mit Methylmethacrylat.

Besonders bevorzugte Gewichtsverhältnisse im thermoplastischen Copolymerisat C. sind 60 bis 80 Gew.-% C.1 und 40 bis 20 Gew.-% C.2.

Die Copolymerisate gemäß Komponente C. sind bekannt und lassen sich durch radikalische Polymerisation, insbesondere durch Emulsions-, Suspensions-, Lösungs-oder Massepolymerisation herstellen. Die Copolymerisate gemäß Komponente C. besitzen vorzugsweise Molekulargewichte $\bar{M}$ w (Gewichtsmittel, ermittelt durch Lichtstreuung oder Sedimentation) zwischen 15.000 und 200.000 und Grenzviskositäten [$\eta$] zwischen 20 und 110 ml/g (gemessen in Dimethylformamid bis 25°C).

Erfindungsgemäß wirksame Ester D. sind die Umsetzungsprodukte von dreiwertigen Alkoholen, wie beispielsweise Glycerin, 1,1,1-Trimethylolpropan oder Hexantriol mit gesättigten Fettsäuren, deren Kohlenstoffzahl 10 bis 22 C-Atome beträgt. Alle aliphatischen gesättigten Monocarbonsäuren zwischen Caprinsäure und der Behensäure sind geeignet. Die dreiwertigen Alkohole können sowohl mit einer als auch mit mehreren dieser Fettsäuren verestert sein; erwähnt seien hierzu die natürlich vorkommenden Glyceride gesättigter Fettsäuren.

Den erfindungsgemäßen Formmassen können zusätzlich andere, von der Komponente D verschiedene und für thermoplastische Polycarbonate bekannte Entformungsmittel zugesetzt werden, beispielsweise langkettige Monocarbonsäureester von einwertigen Fettsäuren, wie Loxiol G 47®, beispielsweise gemäß DE-OS 2 220 185, oder langkettige Monocarbonsäureester von mehrwertigen Alkoholen, beispielsweise gemäß DE-OS 2 729 485, DE-OS 2 507 748 und De-OS 2 701 725, wie etwa Ester vom Pentaerythrit, wie beispielsweise Pentaerythrittetrastearat.

Die erfindungsgemäßen Formmassen können weitere für Polycarbonate, Pfropfpolymerisate oder thermoplastische Copolymerisate bekannte Zusätze, wie Stabilisatoren, Pigmente, Flammschutzmittel und Antistatika in den üblichen Mengen enthalten.

Die erfindungsgemäßen Formmassen, enthaltend die Komponenten A., B., D und gegebenenfalls C., andere von der Komponente D. verschiedene Entformungsmittel, Stabilisatoren, Pigmente, Flammschutzmittel und/oder Antistatika werden hergestellt, indem man die jeweiligen Bestandteile in bekannter Weise vermischt und bei Temperaturen von 200°C bis 330°C in üblichen Aggregaten, wie Innenknetern, Extrudern oder Doppelwellenschnecken, schmelzcompoundiert oder schmelzextrudiert.

Gegenstand der vorliegenden Erfindung ist somit auch ein Verfahren zur Herstellung von thermoplastischen Formmassen, enthaltend die Komponenten A., B., D und gegebenenfalls C., andere von der Komponente D. ver schiedene Entformungsmittel, Stabilisatoren, Pigmente, Flammschutzmittel und/oder Antistatika, das dadurch gekennzeichnet ist, daß man die Komponenten A., B., D und gegebenenfalls C., andere von der Komponente D. verschiedene Entformungsmittel, Stabilisatoren, Pigmente, Flammschutzmittel und/oder Antistatika in bekannter Weise vermischt und danach bei Temperaturen von 200°C bis 330°C in gebräuchlichen Aggregaten schmelzcompoundiert oder schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind einmal Gehäuseteile jeder Art beispielsweise für Haushaltsgeräte, wie Saftpressen, Kaffeemaschinen und Mixer, zum anderen Abdeckplatten für den Bausektor und Teile für den Bausektor und Teile für den Kfz-Sektor. Sie werden außerdem auf dem Gebiet der Elektrotechnik, beispielsweise für Steckerleisten, eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

Teilchengröße bedeutet immer mittlere Teilchendurchmesser $d_{50}$, ermittelt durch Ultrazentrifugenmessungen nach W. Scholtan et al., Kolloid-Z. u. Z. polymere 250 (1972), 782-796.

Beispiele

Eingesetzte Polykondensate und Polymerisate

A. Lineares Polycarbonat auf Basis Bisphenol A mit einer relativen Lösungsviskosität $\eta_{rel}$ von 1,26 bis 1,28, gemessen in $CH_2Cl_2$ bei 25°C und in einer Konzentration von 0,5 g/100 ml;

B. SAN-Pfropfpolymerisat von 50 % Styrol/Acrylnitril-Gemisch (im Gewichtsverhältnis von 72:28) auf 50 % teilchenförmiges Polybutadien mit einer mittleren Teilchengröße ($d_{50}$) von 0,4 $\mu$m, erhalten durch Emulsionspolymerisation;

C. Styrol/Acrylnitril-Copolymerisat mit einem Styrol/Acrylnitril-Verhältnis von 72:28 und einer Grenzviskösität von [$\eta$] = 0,55 dl/g (Messung in Dimethylformamid bei 20°C);

D. Trimethylolpropantristearat.

Die Compoundierung der Komponenten A. - D. erfolgte auf einem Doppelwellenextruder (Werner & Pfleiderer) vom Typ ZSK 53 bei einer Temperatur von 230 bis 240°C.

Zur Bestimmung der Entformbarkeit wurden von den erfindungsgemäßen Formmassen mittels eines Hülsenwerkzeugs Zylinder von 35 mm Länge und einem Durchmeser von 35 mm bei 4 mm Wanddicke gespritzt.

Bei einer vorgegebenen Kerntemperatur des Hülsenwerkzeugs wurde die zum Entformen notwendige Entformungskraft in bar gemessen.

Die Kerntemperatur wurde dabei in 10°C-Intervallen von 60°C auf 150°C erhöht.

Die jeweiligen Ergebnisse sind in der folgenden Tabelle zusammengefaßt.

Es zeigt sich, daß bei den entscheidenden höheren Kerntemperaturen die erfindungsgemäßen Formmassen noch entformbar sind, während es bei den Vergleichsversuchen zu einem Abriß des Angusses kommt beziehungsweise keine Entformung mehr möglich ist.

Tabelle

| A. | B. | C. | D. | Entformungskraft [bar] bei einer Kerntemperatur von | | | | | | | | | |
|---|---|---|---|---|---|---|---|---|---|---|---|---|---|
| Gew.-Tl. | ~ | ~ | ~ | 60° C | 70° C | 80° C | 90° C | 100° C | 110° C | 120° C | 130° C | 140° C | 150° C |
| erfindungsgemäßes Beispiel | | | | | | | | | | | | | |
| 60 | 24 | 16 | 0,5 | 39,4 | 32,2 | 24,9 | 18,2 | 13,4 | 10,9 | 10,4 | 24,6 | 51,5 | 108,4 |
| Vergleichsbeispiel | | | | | | | | | | | | | |
| 60 | 24 | 16 | - | 37,5 | 28,7 | 19,6 | 14,7 | 12,5 | 17,9 | Angußabriß beziehungsweise keine Entformung mehr möglich | | | |

**Ansprüche**

1. Thermoplastische Formmassen, enthaltend

A. 10 bis 90 Gew.-Teile eines oder mehrerer thermoplastischer Polycarbonate,

B. 10 bis 60 Gew.-Teile eines oder mehrerer Pfropfpolymerisate aus

B.1 5 bis 90 Gew.-Teilen einer Mischung aus

B.1.1 50 bis 95 Gew.-Teilen Styrol, α-Methylstyrol, kernsubstituiertem Styrol, Methylmethacrylat oder Mischungen daraus, und

B.1.2 50 bis 5 Gew.-Teilen (Meth)Acrylnitril, Methylmethacrylat, Maleinsäureanhydrid, N-substituiertem Maleinimid oder Mischungen daraus, auf

B.2 95 bis 10 Gew.-Teile eines Kauschtuks mit einer Glastemperatur $T_G \leq 10\,°C$ und gegebenenfalls.

C. 0 bis 80 Gew.-Teile eines thermoplastischen Copolymerisats aus

C.1 50 bis 95 Gew.-Teilen Styrol, α-Methylstyrol, kernsubstituiertem Styrol, Methylmethacrylat oder Mischungen daraus, und

C.2 50 bis 5 Gew.-Teilen (Meth)Acrylnitril, Methylmethacrylat, Maleinsäureanhydrid, N-substituiertem Maleinimid oder Mischungen daraus, wobei die Summe der Gew.-Teile aus A. + B. + gegebenenfalls C. jeweils 100 Gew.-Teile beträgt, die dadurch gekennzeichnet sind, daß sie

D. 0,1 bis 3 Gew.-Teile, bezogen auf 100 Gew.-Teile A. + B. + gegebenenfalls C., eines oder mehrerer Ester aus gesättigten aliphatischen $C_{10}$ bis $C_{22}$-Monocarbonsäuren und dreiwertigen Alkoholen enthalten.

2. Formmassen gemäß Anspruch 1, dadurch gekennzeichnet, daß die Komponente A. ein Polydiorganosiloxan-Polycarbonat-Blockcopolymer ist.

3. Formmassen gemäß Anspruch 1, dadurch gekennzeichnet, daß die Komponente A. ein Gemisch aus mehreren thermoplastischen Polycarbonaten ist und wobei, wenn es sich um Mischungen mit Polydiorganosiloxan-Polycarbonat-Blockcopolymeren handelt, der Gewichtsanteil der Diphenole (IIa), bezogen auf die Gesamtsumme der Diphenole in der Polycarbonatmischung, zwischen 1 und 20 Gew.-% liegt.

4. Formmassen gemäß Ansprüche 1 bis 3, dadurch gekennzeichnet, daß die Komponente A. in Mengen von 20 bis 80 Gew.-Teilen eingesetzt wird.

5. Formmassen gemäß Ansprüche 1 bis 4, dadurch gekennzeichnet, daß die Komponente B. in Mengen von 10 bis 50 Gew.-Teilen eingesetzt wird.

6. Formmassen gemäß Ansprüche 1 bis 5, dadurch gekennzeichnet, daß die Komponente C. in Mengen von 10 bis 70 Gew.-Teilen eingesetzt wird.

7. Formmassen gemäß Ansprüche 1 bis 6, dadurch gekennzeichnet, daß die Komponente D. in Mengen von 0,2 bis 2,0 Gew.-Teilen eingesetzt wird.

8. Formmassen gemäß Ansprüche 1 bis 7, dadurch gekennzeichnet, daß die Komponente B. aus 30 bis 80 Gew.-Teilen B.1 und 70 bis 20 Gew.-Teilen B.2 zusammengesetzt ist.

9. Formmassen gemäß Ansprüche 1 bis 8, dadurch gekennzeichnet, daß sie zusätzlich mindestens einen Zustz, ausgewählt aus der Gruppe der von der Komponente D. verschiedenen Entformungsmittel, Stabilisatoren, Pigmente, Flammschutzmittel und Antistatika, enthalten.

10. Verfahren zur Herstellung der Formmassen gemäß der Ansprüche 1 bis 8, dadurch gekennzeichnet, daß man die Komponenten A., B., D und gegebenenfalls C. in bekannter Weise vermischt und danach bei Temperaturen von 200°C bis 330°C in gebräuchlichen Aggregaten schmelzcompoundiert oder schmelzextrudiert.

11. Verfahren gemäß Anspruch 10 zur Herstellung der Formmassen des Anspruchs 9, dadurch gekennzeichnet, daß man mindestens einen Zusatz, ausgewählt aus der Gruppe der von der Komponente D. verschiedenen Entformungsmittel, Stabilisatoren, Pigmente, Flammschutzmittel und Antistatika, einbezieht.